# EUROPÄISCHE PATENTSCHRIFT

(11) **EP 0 916 798 B1**
(45) Veröffentlichungstag und Bekanntmachung des Hinweises auf die Patenterteilung: **27.10.2004**
(21) Anmeldenummer: 98120699.8
(22) Anmeldetag: 06.11.1998
(51) Int. Cl.: E06B 3/54, E04B 2/88

(54) **Halterung für plattenförmige Bauteile**
Fixing means for building panels
Dispositif de support pour panneaux de construction

(30) Priorität: 11.11.1997 DE 19749634
(43) Veröffentlichungstag der Anmeldung: 19.05.1999
(73) Patentinhaber: MERO GmbH & Co. KG, 97084 Würzburg (DE)
(72) Erfinder: Kemmer, Wolfgang, 97074 Würzburg (DE); Stühler, Wolfgang, 97523 Schwanfeld (DE)
(74) Vertreter: Böck, Bernhard, Dipl.-Ing.

(56) Entgegenhaltungen:
- EP-A- 0 201 212
- EP-A- 0 655 543
- DE-A- 19 519 527
- DE-A- 19 623 797
- DE-B- 1 109 464

## Beschreibung

Die Erfindung betrifft eine Halterung für plattenförmige Bauteile nach dem Oberbegriff des Patentanspruchs 1. Derartige Halterungen können mit einem Sockelelement an plattenförmigen Bauteilen und mit einem Gelenkbolzen an einer Tragkonstruktion befestigt werden. Der Gelenkbolzen ist dabei mit einem Kugelelement drehbar in dem Sockelelement gelagert und kann nach allen Seiten begrenzt geschwenkt werden.

Die Halterung gemäß der Erfindung kann in grundsätzlich beliebiger Weise Verwendung finden für alle Arten von plattenförmigen Bauteilen, beispielsweise Holzplatten, Leichtmetallplatten, Kunststoffplatten oder dergleichen, seien dies nun einlagige oder mehrlagige Plattenelemente nach der Art von Sandwichstrukturen, insbesondere wenn es gilt, die plattenförmigen Bauteile im wesentlichen biegemomentfrei zu lagern. Vorzugsweise jedoch liegt der Anwendungsbereich bei Glasplatten, insbesondere im Baubereich, die aufgrund ihrer Struktur bei auftretenden Biegemomenten besonders bruchgefährdet sind.

Im Regelfall werden die Halterungen an den Eckpunkten der plattenförmigen Bauteile angeordnet. Wirkt auf die plattenförmigen Bauteile im eingebauten Zustand eine Flächenlast, beispielsweise verursacht durch eine Windströmung, so wird die Platte durch die Flächenlast elastisch ausgewölbt und die Befestigungspunkte in den Ecken der Platte schwenken um den Drehpunkt des Gelenkzapfens. Da also die Befestigungspunkte in derartigen Halterungen frei schwenkbar sind, kann die Platte sich frei elastisch verformen. In den Haltepunkten wird diese Verformung nicht behindert, wodurch hohe Biegemomente entstehen würden. Die innerhalb des Plattenmaterials auftretenden Zug- und Druckspannungen können damit im Vergleich zu einer starren Befestigung in bekannter Art und Weise verringert werden.

Bei vielen Anwendungen derartiger Halterungen, insbesondere bei der Gestaltung von Gebäudefassaden, besteht die Forderung, plattenförmige Bauteile mit immer größerer Grundfläche zu befestigen. Mit zunehmender Grundfläche der plattenförmigen Bauteile nimmt die Belastung der Halterungen in den einzelnen Befestigungspunkten infolge des ansteigenden Eigengewichts und der ansteigenden Angriffsfläche für Windströmungen erheblich zu. Soll die Belastung der Halterungen in den einzelnen Befestigungspunkten ein gewisses Maß nicht überschreiten, so muß bei der Erhöhung der Grundfläche der plattenförmigen Bauteile die Anzahl der Befestigungspunkte erhöht werden. Zur Befestigung plattenförmiger Bauteile mit großer Grundfläche sind deshalb Befestigungspunkte allein in den Ecken der Platten nicht mehr ausreichend, sondern es müssen zusätzliche Befestigungspunkte am Umfang oder im Innenbereich der Platten angeordnet werden.

Nachteilig bei den aus dem Stand der Technik bekannten Halterungen ist es, daß der Gelenkbolzen lediglich in dem Sockelelement geschwenkt werden kann.

Wird ein plattenförmiges Bauteil mit derartigen, lediglich schwenkbaren Halterungen in mehreren Befestigungspunkten fixiert, die nicht alle in den Ecken des plattenförmigen Bauteils angeordnet sind, so kann sich das plattenförmige Bauteil beim Auftreten einer Flächenlast nicht mehr frei elastisch auswölben. Vielmehr bilden sich in dem plattenförmigen Bauteil mehrere ausgewölbte Bereiche aus, die an Verbindungslinien zwischen verschiedenen Befestigungspunkten ineinander übergehen. Im Ergebnis läßt eine derartige Befestigung von plattenförmigen Bauteilen in dem - Übergangsbereich zwischen den verschiedenen ausgewölbten Bereichen keine Verformung der Bauteile zu. Da also keine Verformung in diesem Bereich möglich ist, bauen sich in diesem Bereich Spannungsspitzen auf, die leicht zur Überschreitung der zulässigen Festigkeitswerte der plattenförmigen Bauteile führen können.

Aus der DE 196 23 797 A1 ist eine gattungsgemäße Halterung mit Kugelgelenk bekannt.

Aus der DE 195 19 527 A1 ist eine Halterung für Platten, insbesondere Glasplatten, bekannt. Der schwenkbar gelagerte Lagerkopf der Halterung wird durch zwei Federpakete federelastisch in einer Mittelposition gehalten. Auf diese Weise kann der Lagerkopf entgegen der Kraft der Federpakete Axialbewegungen und Schwenkbewegungen ausführen.

Ausgehend von diesem Stand der Technik ist es die Aufgabe der vorliegenden Erfindung, eine kompaktere Halterung der eingangs genannten Art zu schaffen.

Diese Aufgabe wird durch eine Halterung mit den Merkmalen des Patentanspruchs 1 gelöst.

Vorteilhafte Ausgestaltungen der Erfindung sind Gegenstand der Unteransprüche.

Bei der erfindungsgemäßen Halterung, die insbesondere für Glasplatten geeignet ist, kann das Kugelelement in der Ausnehmung des Sockelelements, in der es schwenkbar gelagert ist, zumindest geringfügig längs der Längsachse des Gelenkbolzens linear verschoben werden. Kugelelement im Sinne der vorliegenden Erfindung bedeutet dabei nicht notwendigerweise eine ganze Kugel, sondern ein Bauteil, das zumindest in dem Bereich, in dem bestimmungsgemäß eine gelenkige Verschwenkung bzw. ein Verdrehen erfolgt, sphärische Teilflächen aufweist. Dadurch, daß das Kugelelement in der Ausnehmung des Sockelelements linear verschoben werden kann, erhält der Gelenkbolzen einen zusätzlichen Freiheitsgrad gegenüber dem Sockelelement. Der Gelenkbolzen kann also begrenzt verschwenkt werden und zudem eine lineare Bewegung längs seiner Längsachse ausführen. Weiter weist die erfindungsgemäße Halterung zumindest ein Federelement auf, das mittelbar oder unmittelbar auf das Kugelelement einwirkt. Durch dieses Federelement wird das Kugelelement elastisch in der Ausnehmung des Sockelelements verspannt. Dadurch wird erreicht, daß trotz des zusätzlichen linearen Freiheitsgrades des Kugelelements in der Ausnehmung des Sockelelements, der Gelenkbolzen zu jeder Zeit spielfrei mit dem Sockelelement Kontakt hat.

Erfindungsgemäß weist die Ausnehmung zumindest zwei rotationssymmetrische Bereiche auf, deren Rotationsachse im wesentlichen entlang der Längsachse des Gelenkbolzens verläuft. Der erste Abschnitt ist in der Form eines Kreiszylinders ausgestaltet und kann das Kugelelement aufnehmen. Das heißt, der Durchmesser des ersten Abschnittes ist zumindest etwas größer als der Durchmesser des Kugelelements. Bei einer linearen Verschiebung des Gelenkbolzens gegenüber dem Sockelelement gleitet das Kugelelement entlang der Zylinderflächen bis das erste Ende des Gelenkbolzens am Grund der Ausnehmung zur Anlage kommt. Der zweite Abschnitt der Ausnehmung ist in der Form des Konusstumpfes ausgestaltet und kann von dem Gelenkbolzen durchgriffen werden. Die konische Form der

Ausnehmung verengt sich dabei. Durch die konische Form des zweiten Bereiches der Ausnehmung kann ein größerer Schwenkbereich des Gelenkbolzens gegenüber dem Sockelelement erreicht werden. Wird der Gelenkbolzen linear in Richtung des zweiten Endes des Gelenkbolzens verschoben, so rutscht das Kugelelement in den zweiten Bereich der Ausnehmung. In der Radialebene in der der erste Bereich und der zweite Bereich der Ausnehmung ineinander übergehen, weisen die Zylindermantelflächen des ersten Bereichs und die konische Mantelfläche des zweiten Bereichs den gleichen Durchmesser auf und gehen unmittelbar ineinander über. Im unbelasteten Zustand sollte das Kugelelement im Bereich des Übergangs vom ersten Bereich der Ausnehmung in den zweiten Bereich der Ausnehmung angeordnet sein.

In den beiden rotationssymmetrischen Bereichen der Ausnehmung ist jeweils ein Federelement angeordnet und kann mittelbar oder unmittelbar auf das Kugelelement einwirken. Durch diese Anordnung wird erreicht, daß das Kugelelement im unbelasteten Zustand der Halterung in einer Mittelposition gehalten wird und von dieser Mittelposition ausgehend bei einer auftretenden Belastung sowohl im die Richtung des ersten Endes des Gelenkbolzens als auch in die Richtung des zweiten Endes des Gelenkbolzens linear verschiebbar ist. Die beiden Federelemente sollten dabei mit einer gewissen Vorspannung in die Halterung eingebaut werden, damit bei einer Verschiebung des Kugelelements in der Ausnehmung sich jeweils eines der Federelemente entspannt und dadurch zu jeder Zeit spielfrei an dem Kugelelement anliegend bleibt.

Wird das plattenförmige Bauteil infolge einer Flächenlast verformt und bilden sich dadurch die verschiedenen ausgewölbten Bereiche aus, so können die Befestigungspunkte der Platte in der Halterung nicht nur geschwenkt, sondern auch linear verschoben werden. Durch die lineare Verschiebung der Befestigungspunkte wird die Verformung der plattenförmigen Bauteile in den Übergangsbereichen zwischen den einzelnen ausgewölbten Bereichen erlaubt, wodurch ein sanfterer Übergang zwischen den einzelnen Bereichen erreicht wird, der zu einem Abbau der Spannungsspitzen in diesen Bereichen führt. Falls die Halterungen eine ausreichende lineare Verschiebung der einzelnen Befestigungspunkte ermöglicht, kann erreicht werden, daß das plattenförmige Bauteil nicht mehrere ausgewölbte Bereiche, sondern wiederum lediglich eine Auswölbung beim Auftreten einer Flächenlast aufweist. In diesem Fall ergibt sich ein gleichmäßiger Spannungsverlauf in dem Plattenmaterial und Spannungsspitzen werden vermieden.

Erfindungsgemäß wirken auf das Kugelelement in der Ausnehmung des Sockelelements zwei Federelemente auf gegenüberliegenden Seiten des Kugelelements ein. Im unbelasteten Zustand wird dabei das Kugelelement zwischen den beiden einander entgegenwirkenden Federelementen in der Ausnehmung verspannt. Die lineare Verschiebung des Kugelelements in der Ausnehmung des Sockelelements längs der Längsachse des Gelenkbolzens kann dann in zwei Richtungen erfolgen. Durch diese zweiseitig verschiebbaren Halterungen können die Spannungsspitzen in dem Plattenmaterial beim Auftreten einer Flächenlast optimal verringert werden, da die Haltepunkte nicht nur in Richtung der Flächenlast, sondern auch, insbesondere im Randbereich der Platte, in Gegenrichtung der Flächenlast verschoben werden können. Dies ermöglicht eine möglichst gleichmäßige Auswölbung des plattenförmigen Bauteils.

Wie die gelenkige Anbindung des Kugelelements in der Ausnehmung des Sockelelements realisiert wird, ist im Grundsatz gleichgültig. So können beispielsweise die Federelemente lediglich mittelbar über zwischen die Federelemente und das Kugelelement angeordnete Lagerplatten einwirken, die zu der sphärischen Funktionsfläche des Kugelelements formund/oder funktionskomplementäre, sphärische Funktionsflächen aufweisen. Vorzugswürdig ist es jedoch, wenn die Federelemente unmittelbar auf das Kugelelement einwirken und die zur Herstellung der Gelenkfunktion erforderlichen Funktionsflächen in die an dem Kugelelement zur Anlage kommenden Bereiche der Federelemente eingearbeitet sind.

Als Federelemente kommen alle Bauteile in Frage, die sich bei der linearen Verschiebung des Kugelelements im erforderlichen Maß elastisch verformen können und zugleich ausreichende elastische Rückstellkräfte zur Verfügung stellen, um den spielfreien Sitz des Gelenkzapfens in der Ausnehmung des Sockelelements sowohl im belasteten als auch unbelasteten Zustand der Halterung zu ermöglichen. Zu denken ist dabei an alle Arten von Federelementen wie beispielsweise gummielastische Pufferelemente, oder auch alle Arten von metallischen Federelementen, wie beispielsweise Tellerfedern oder Blattfedern.

Besonders kostengünstig ist es, die Federelemente als Schraubenfedern auszubilden, da die Enden von Schraubenfedern mit ihrer ringförmigen Struktur unmittelbar an dem Kugelelement zur Anlage kommen können und damit im wesentlichen ohne weitere Hilfsmittel die gelenkige Aufnahme des Kugelelements in der Ausnehmung des Sockelelements geschaffen wird.

Die elastischen Eigenschaften der beiden Federelemente, die auf den gegenüberliegenden Seiten des Kugelelements in der Ausnehmung des Sockelelements angeordnet sind, sollten vorzugswürdig so aufeinander abgestimmt sein, daß im unbelasteten Zustand der Halterung der Mittelpunkt des Kugelelements im wesentlichen in der Radialebene zu liegen kommt, in der der zylindrische und der konische Bereich der Ausnehmung in dem Sockelelement ineinander übergehen. In dieser Position weist das Kugelelement ein minimales radiales Spiel auf, da sich der größte radiale Durchmesser des Kugelelements gerade noch in dem ersten zylindrischen Bereich der Ausnehmung befindet und andererseits wird bereits der optimale Schwenkbereich des Gelenkbolzens ermöglicht, da sich der Schaft des Gelenkbolzens und ein Teil des Kugelelements in dem zweiten konischen Bereich der Ausnehmung befinden.

Prinzipiell ist es gleichgültig, ob der Drehmittelpunkt der Halterung innerhalb der Bauteilebene des plattenförmigen Bauteils befindet oder ob der Drehmittelpunkt etwas außerhalb der Bauteilebene liegt. Da jedoch aus der versetzten Anordnung des Drehmittelpunkts ein Hebelarm des Drehmittelpunkt gegenüber der Mittelebene des plattenförmigen Bauteils folgt, entstehen durch diese Anordnung Differenzmomente. Um diese Differenzmomente auszuschließen, ist es deshalb vorteilhaft, die elastischen Eigenschaften der beiden Federelemente auf den gegenüberliegenden Seiten des Kugelelements so aufeinander abzustimmen, daß im unbelasteten Zustand der Halterung der Mittelpunkt des Kugelelements im wesentlichen in einer Mittelebene zwischen den Oberflächen der plattenförmigen Bauteile zu liegen kommt.

Die verwendeten Federelemente sollten im wesentlichen formkomplementär zudem Bereich der Ausnehmung, in den sie eingebaut werden, ausgestaltet sein, um einen möglichst spielfreien Sitz der Federelemente und des Kugelelements zu ermöglichen. Das Federelement, das in dem konischen Bereich der Ausnehmung des Sockelelements angeordnet ist, sollte darüber hinaus eine konische Ausnehmung enthalten, die von dem Schaft des Gelenkbolzens durchgreifbar ist und sich zu der Seite des Kugelelements hin verengt. Im Ergebnis entsteht ein Federelement, dessen konische Außenseite in der Ausnehmung des Sockelelements anliegt und das von dem Schaft des Gelenkbolzens in einer konischen Ausnehmung durchgriffen werden kann, so daß der Gelenkbolzen einen größtmöglichen Schwenkbereich aufweist.

Um eine möglichst kostengünstige Herstellung und Montage der Halterung zu ermöglichen, sollte das Sockelelement vorzugswürdig auf mindestens zwei Sockelteilelementen zusammengesetzt sein. Dabei sind die Sockelteilelemente so zu gestalten, daß sie mit ihren zueinander weisenden Radialflächen unter Einschluß des Kugelelements und der Federelemente aneinander befestigbar sind. Ob dabei eine lösbare Befestigungsart, wie beispielsweise das Aufeinanderschrauben der beiden Sockelteilemente, oder eine unlösbare Befestigungsart, wie beispielsweise das Verkleben oder Verschweißen der beiden Sockelteilelemente, gewählt wird, ist auf den jeweiligen Einsatzzweck abzustimmen. Besonders exakt können die beiden Sockelteilelemente durch Reibschweißen miteinander verbunden werden.

Eine Möglichkeit zur Gestaltung der beiden Sockelteilelemente ist es, in dem ersten Sockelteilelement den zylindrischen Bereich der Ausnehmung zur Aufnahme des Kugelelements und in dem zweiten Sockelteilelement den konischen Bereich der Ausnehmung zur Aufnahme des Kugelelements anzuordnen. Diese Bauweise erlaubt den Aufbau eines Baukastensystems für Halterungen zur Befestigung von plattenförmigen Bauteilen mit wechselnden Plattenstärken. Das Sockelteilelement in dem der konische Bereich der Ausnehmung zur Aufnahme des Kugelelements angeordnet ist, wird für alle Plattenstärken in gleicher Form verwendet. Der Maßausgleich erfolgt durch eine Veränderung der Länge des Sockelteilelements, das den zylindrischen Bereich der Ausnehmung zur Aufnahme des Kugelelements enthält, da es in unterschiedlichen Längen einfach gefertigt werden kann. Dadurch wird die herzustellende Teilevielfalt reduziert. Beim Zusammenbau muß dann ein längeres Federelement verwendet werden, das der Länge des Sockelteilelements entspricht.

Besonders kostengünstig läßt sich das Sockelelement herstellen, wenn das erste Sockelteilelement den Grundkörper des Sockelelements darstellt und sowohl den zylindrischen als auch den konischen Bereich der Ausnehmung zur Aufnahme des Kugelelements enthält. Das zweite Sockelteilelement kann dann als einfacher Deckel, insbesondere in der Art einer gelochten Scheibe, ausgestaltet sein, der von dem Schaft des Gelenkbolzens durchgreifbar ist. Dieser Deckel kann an dem zum Schaft des Gelenkbolzens hinweisenden Ende des ersten Sockelteilelements unter Einschluß des Kugelelements und der Federelemente befestigt werden.

Zur Fixierung der Halterung an dem plattenförmigen Bauteil sollte das erste Sockelteilelement vorzugswürdig in an sich bekannter Art an seinem vom Gelenkbolzen wegweisenden Ende einen flanschartig umlaufenden oder konisch angeschrägten Randbereich aufweisen, der an dem plattenförmigen Bauteil mittelbar oder unmittelbar zur Anlage bringbar ist. Zwischen dem Sockelelement und der Ausnehmung in dem plattenförmigen Bauteil können beispielsweise metallische oder gummielastische Hülsen angeordnet werden, um einen Maßausgleich zu ermöglichen. Zur klemmenden Befestigung des Sockelelements in der Ausnehmung des plattenförmigen Bauteils sollte das Sockelelement in an sich bekannter Art zumindest abschnittsweise ein Außengewinde aufweisen, auf das ein Befestigungsring derart aufschraubbar ist, daß das plattenförmige Bauteil zwischen dem flanschartig umlaufenden oder konisch angeschrägten Randbereich des ersten Sockelteilelements und dem Befestigungsring mittelbar oder unmittelbar klemmbar ist.

Nachfolgend wird die Erfindung anhand lediglich bevorzugte Ausführungsformen zeigender Zeichnungen näher erläutert. Es zeigt:
**Fig. 1** in schematischer Darstellung ein erstes Ausführungsbeispiel einer Halterung im Längsschnitt;
**Fig. 2** in schematischer Darstellung eine zweite Ausführungsform einer Halterung im Längsschnitt;
**Fig. 3** eine erste Ausführungsform eines plattenförmigen Bauteils mit Halterung in Ansicht von oben;
**Fig. 4** die Ausführungsform aus **Fig. 3** im seitlichen Querschnitt;
**Fig. 5** eine zweite Ausführungsform eines plattenförmigen Bauteils mit Halterung in Ansicht von oben;
**Fig. 6** die Ausführungsform aus **Fig. 5** im seitlichen Querschnitt.

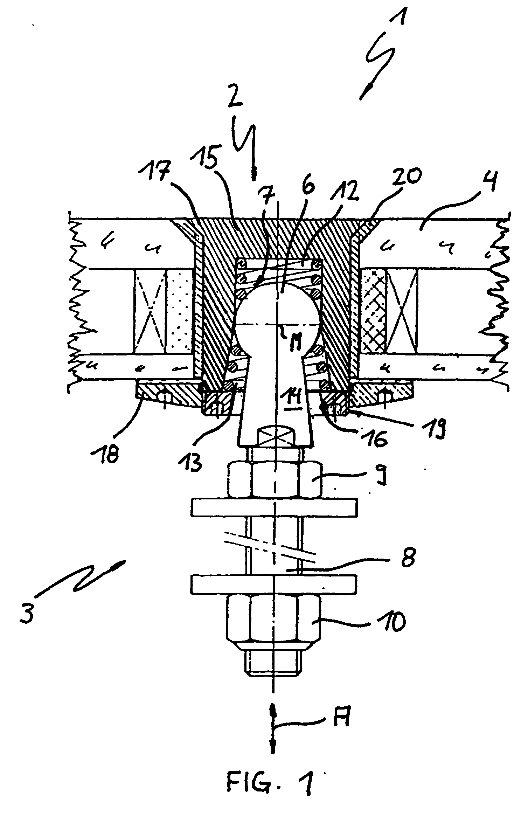

In **Fig. 1** ist eine Halterung 1 mit einem Sockelelement 2 und einem Gelenkbolzen 3 dargestellt. Das Sockelelement 2 durchgreift eine Ausnehmung in einem plattenförmigen Bauteil 4, das in der Art einer Sandwichkonstruktion ausgeführt ist. Das erste Ende des Gelenkbolzens 3 ist als Kugelelement 6 ausgeformt, das in einer Ausnehmung 7 des Sockelelements schwenkbar gelagert ist. Das zweite Ende des Gelenkbolzens 3 ist in der Form einer Gewindestange 8 ausgeführt und kann mittels der Muttern 9 und 10 an einer nicht dargestellten Tragkonstruktion fixiert werden. Die Ausnehmung 7 des Sockelelements 2 ist in der Art ausgeformt, daß der Gelenkbolzen 3 in Richtung des Bewegungspfeils A längs seiner Längsachse linear verschoben werden kann.

Zwischen den axialen Begrenzungen der Ausnehmung 7 und den gegenüberliegenden Seiten des Kugelelements 6 sind jeweils die als Schraubenfedern ausgebildeten Federelemente 12 und 13 angeordnet. Die beiden Schraubenfedern 12 und 13 sind im vorgespannten Zustand eingebaut und sorgen dafür, daß das Kugelelement 6 im unbelasteten Zustand der Halterung 1 mit jeweils einem gewissen Abstand zwischen den beiden axialen Enden der Ausnehmung 7 gehalten wird. Die beiden Schraubendedern 12 und 13 liegen unmittelbar an dem Kugelelement 6 an und die erforderliche Gelenkfunktion wird durch die ringförmige Struktur der beiden axialen Enden der Schraubenfedern 12 und 13 zur Verfügung gestellt. Die Schraubenfeder 12 ist in dem zylindrischen Bereich der Ausnehmung 7 und die Schraubenfeder 13 in dem konischen Bereich der Ausnehmung 7 angeordnet. Der konische und der zylindrische Bereich der Ausnehmung 7 gehen in der Radialebene ineinander über, in der der Mittelpunkt M im unbelasteten Zustand der Halterung 1 zu liegen kommt. Auch die Ausnehmung der Schraubenfeder 13, die von dem Gelenkbolzen 3 durchgriffen wird, zeigt eine konische Form, um die Schwenkbewegung des Gelenkbolzens 3 im Bereich 14 des Gelenkbolzens nicht zu behindern.

Das Sockelelement 2 ist aus den Sockelteilelementen 15 und 16 zusammengesetzt. Das Sockelteilelement 15 stellt dabei den Grundkörper dar, der die Ausnehmung in dem plattenförmigen Bauteil 4 durchgreift und in dem sowohl der konische als auch der zylindrische Bereich der Ausnehmung 7 angeordnet sind. Das Sockelteilelement 16 verschließt die Ausnehmung 7 unter Einschluß der Federelemente 12 und 13 und des Kugelelements 6. Zum Durchtritt des Gelenkbolzens 3 ist in das deckelartige Sockelelement 16 die konisch zulaufende Ausnehmung 17 eingearbeitet.

Das plattenförmige Bauteil 4 wird zwischen dem angeschrägten Randbereich 17 des ersten Sockelteilelements und dem Befestigungsring 18 durch Aufschrauben des Befestigungsrings 18 auf das Gewinde 19 klemmend fixiert. Zur Dämpfung und zum Maßausgleich ist zwischen dem Sockelelement 2 und der Ausnehmung des plattenförmigen Bauteils 4 die Hülse 20 angeordnet.

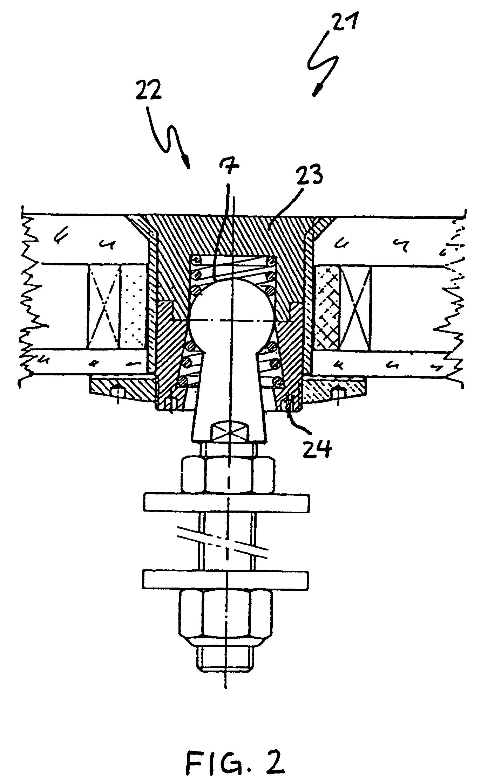

In **Fig. 2** ist die Halterung 21 dargestellt, deren Wirkprinzip dem der Halterung 1 aus **Fig.1** entspricht. Das Sockelelement 22 ist dabei aus den Sockelteilelementen 23 und 24 zusammengesetzt, wobei das Sockelteilelement 23 den zylindrischen Bereich der Ausnehmung 7 und das Sokkelteilelement 24 den konischen Bereich der Ausnehmung 7 enthält.

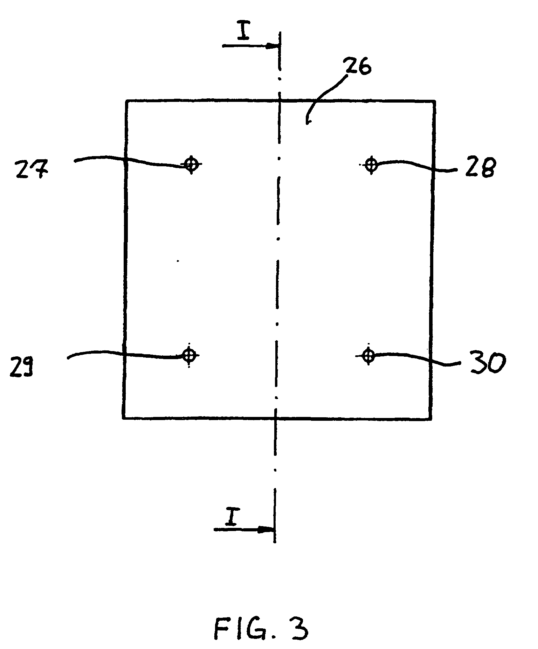

In den **Fig. 3, 4, 5** und **6** wird die unterschiedliche Wirkungsweise von konventionellen Halterungen und Halterungen die erfindungsgemäß längs der Längsachse der Gelenkbolzen verschoben werden können, aufgezeigt. **Fig. 3** zeigt ein plattenförmiges Bauteil 26, das in den Befestigungspunkten 27, 28, 29 und 30 an einer Tragkonstruktion befestigbar ist. Die Befestigungspunkte 27 bis 30 sind dabei im wesentlichen in den Eckpunkten der Platte 26 angeordnet.

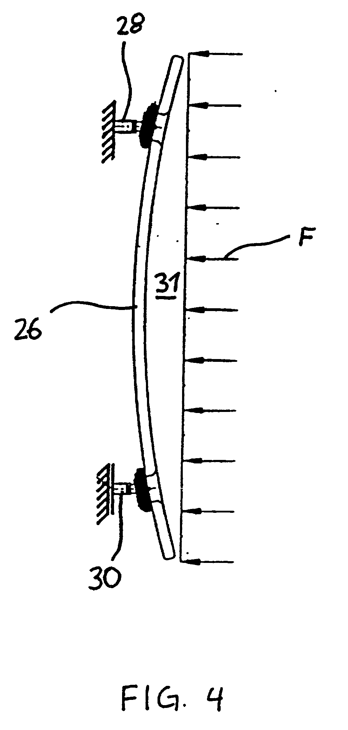

**Fig. 4** zeigt die Platte 26 im seitlichen Schnitt entlang der Schnittlinie I-I. Wirkt auf die Platte 26 die Flächenlast F, beispielsweise verursacht durch einen Windstoß, so wölbt sich die Platte 26 unter dieser Last aus und es bildet sich ein Auswölbungsbereich 31. Die Halterung 28 und 30 erlauben eine Schwenkbewegung des Plattenmaterials in den Befestigungspunkten. Im Ergebnis bildet sich bei einer derartigen Anordnung beim Auftreten einer Last ein gleichmäßiger Spannungsverlauf in dem Plattenmaterial aus.

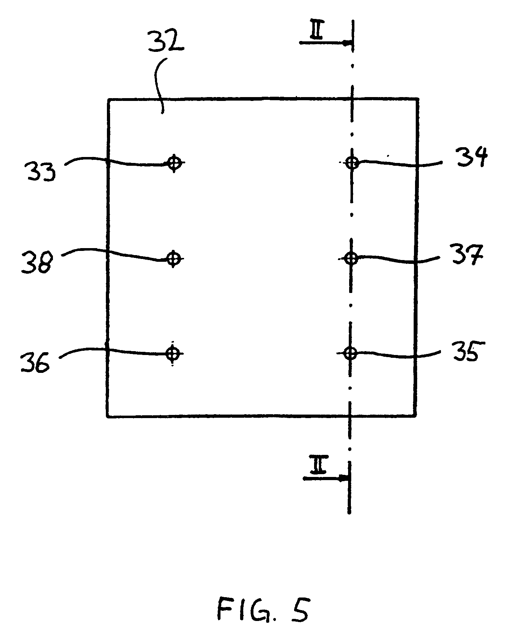

Sollen größere oder schwerere plattenförmige Bauteile fixiert werden, so reicht es in vielen Fällen nicht mehr aus, Befestigungspunkte allein in den Ecken der Bauteile anzuordnen. So weist die in **Fig. 5** gezeigte Platte 32 neben den Befestigungspunkten 33, 34, 35 und 36, die in den Ecken der Platte 32 angeordnet sind, zusätzlich die Befestigungspunkte 37 und 38 auf, die zwischen den Eckpunkten angeordnet sind.

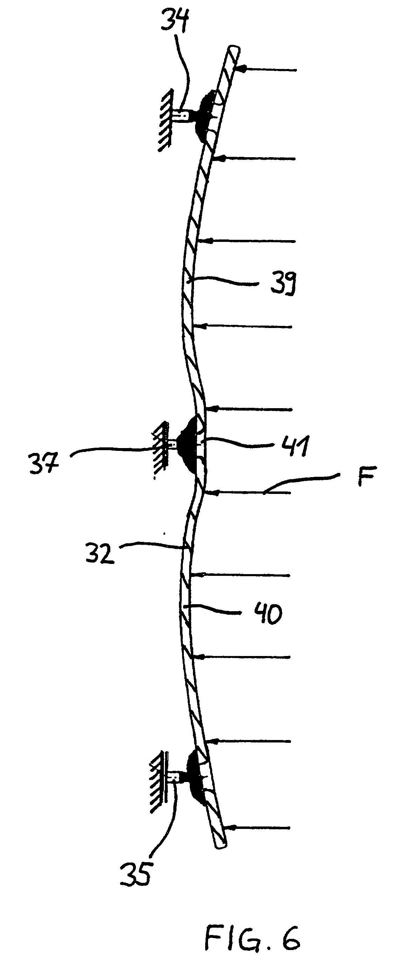

**Fig. 6** zeigt die Platte 32 im seitlichen Schnitt entlang der Schnittlinie II-II. Wird die Platte 32 durch die Flächenlast F belastet, so wölbt sich auch die Platte 32 aus. Da die Befestigungspunkte jedoch nicht allein in den Eckpunkten angeordnet sind, bilden sich dabei jedoch zwei Auswölbungsbereiche 39 und 40 aus. In dem Übergangsbereich 41, der sich entlang der Verbindungslinie zwischen den Befestigungspunkten 37 und 38 ausbildet, würden sich in dem Plattenmaterial hohe Spannungsspitzen aufbauen, wenn eine spannungsabbauende Verformung des Materials nicht zugelassen würde.

Sollen plattenförmige Bauteile in einer im Prinzip zu der in **Fig. 5** und **Fig. 6** dargestellten vergleichbaren Konfiguration eingebaut werden, so können die Spannungsspitzen durch den Einbau der erfindungsgemäßen Halterungen 33, 34, 35, 36, 37 und 38 abgebaut werden. Da die Halterungen 33, 34, 35, 36, 37 und 38 in den Befestigungspunkten entlang der Längsachse der Gelenkbolzen linear verschiebbar sind, wird eine spannungsabbauende Verformung der Platten 32 ermöglicht. Die Halterungen 33 und 34 weichen durch eine lineare Verschiebung in Richtung der Flächenlast F und die Halterungen, 35, 36, 37 und 38 in die Gegenrichtung aus. Im Ergebnis ergibt sich durch diese Verschiebung der Befestigungspunkte eine schwächere Biegeverformung der Platte 32 im Übergangsbereich 41.

## Patentansprüche

1. Halterung für plattenförmige Bauteile, insbesondere Glasplatten, mit einem Sockelelement (2), das eine Ausnehmung im plattenförmigen Bauteil dieses fixierend durchgreift, und einem Gelenkbolzen (3), der an seinem ersten Ende ein Kugelelement (6) aufweist, das in einer Ausnehmung (7) des Sockelelements drehbar gelagert ist, und mit seinem gegenüberliegenden zweiten Ende an einer Tragkonstruktion unter Fixierung des Sockelelements befestigbar ist,
**dadurch gekennzeichnet,**
**dass** das Kugelelement (6) in der Ausnehmung (7) des Sockelelements (2) zumindest geringfügig längs der Längsachse der Ausnehmung linear verschiebbar ist, wobei die Ausnehmung (7) des Sockelelements (2) zur Aufnahme des Kugelelements (6) zumindest zwei rotationssymmetrische Bereiche aufweist, in denen jeweils zumindest ein auf das Kugelelement (6) mittelbar oder unmittelbar einwirkendes Federelement (12, 13) angeordnet ist und deren Rotationsachse im Wesentlichen entlang der Längsachse des Gelenkbolzens (3) verläuft, und wobei der erste Abschnitt das Kugelelement (6) aufnehmen kann und eine kreiszylindrische Mantelfläche aufweist, und wobei der zweite Abschnitt vom Schaft (14) des Gelenkbolzens (3) durchgreifbar ist und eine konische Mantelfläche aufweist, die sich auf der zum Kugelelement (6) weisenden Seite verengt.

2. Halterung nach Anspruch 1,
**dadurch gekennzeichnet,**
**dass** die Federelemente (12, 13) unmittelbar auf das Kugelelement (6) einwirken und die Seiten der Federelemente (12, 13), die an dem Kugelelement (6) zur Anlage kommen, zumindest bereichsweise formkomplementär zu dem Kugelelement (6) ausgebildet sind.

3. Halterung nach Anspruch 2,
**dadurch gekennzeichnet,**
**dass** die Federelemente (12, 13) als Schraubenfedern ausgebildet sind.

4. Halterung nach einem der Ansprüche 1 bis 3,
**dadurch gekennzeichnet,**
**dass** die elastischen Eigenschaften der beiden Federelemente (12, 13) auf den gegenüberliegenden Seiten des Kugelelements (6) so aufeinander abgestimmt sind, dass im unbelasteten Zustand der Halterung (1) der Mittelpunkt des Kugelelements (6) im Wesentlichen in der Radialebene zu liegen kommt, in der der zylindrische und der konische Bereich der Ausnehmung (7) in dem Sockelelement (2) ineinander übergehen.

5. Halterung nach einem der Ansprüche 1 bis 4,
**dadurch gekennzeichnet,**
**dass** die elastischen Eigenschaften der beiden Federelemente (12, 13)auf den gegenüberliegenden Seiten des Kugelelements (6) so aufeinander abgestimmt sind, dass im unbelasteten Zustand der Halterung (1) der Mittelpunkt des Kugelelements (6) im Wesentlichen in einer Mittelebene zwischen den Oberflächen des plattenförmigen Bauteils (4) zu liegen kommt.

6. Halterung nach einem der Ansprüche 1 bis 5,
**dadurch gekennzeichnet,**
**dass** das Federelement (13), das in dem konischen Bereich der Ausnehmung (7) des Sockelelements (2) angeordnet ist, eine konische Ausnehmung enthält, die von dem Schaft (14) des Gelenkbolzens (3) durchgreifbar ist und sich zur Seite des Kugelelements (6) hin verengt.

7. Halterung nach einem der Ansprüche 1 bis 6,
**dadurch gekennzeichnet,**
**dass** das Sockelelement (2) mindestens zwei Sockelteilelemente aufweist (15, 16, 23, 24), wobei die beiden Sockelteilelemente (15, 16, 23, 24) mit ihren zueinander weisenden Radialflächen unter Einschluss des Kugelelements (6) und der Federelemente (12, 13) aneinander befestigbar sind.

8. Halterung nach Anspruch 7,
**dadurch gekennzeichnet,**
**dass** in dem ersten Sockelteilelement (23) der zylindrische Bereich der Ausnehmung (7) zur Aufnahme des Kugelelements (6) und in dem zweiten Sockelteilelement (24) der konische Bereich der Ausnehmung (7) zur Aufnahme des Kugelelements (6) angeordnet ist.

9. Halterung nach Anspruch 8,
**dadurch gekennzeichnet,**
**dass** in dem ersten Sockelteilelement (15) der zylindrische und der konische Bereich der Ausnehmung (7) zur Aufnahme des Kugelelements (6) angeordnet sind und das zweite Sockelteilelement (16) im Wesentlichen als Deckel ausgestaltet ist, der von dem Schaft (14) des Gelenkbolzens (3) durchgreifbar ist und der an dem zum Schaft (14) des Gelenkbolzens (3) hin weisenden Ende des ersten Sockelteilelements (15) unter Einschluss des Kugelelements (6) und der Federelemente (12, 13) befestigbar ist.

10. Halterung nach einem der Ansprüche 8 oder 9,
**dadurch gekennzeichnet,**
**dass** das erste Sockelteilelement (15, 23) an seinem vom Gelenkbolzen (3) weg weisenden Ende einen flanschartig umlaufenden oder konisch angeschrägten Randbereich (17) aufweist, der am plattenförmigen Bauteil (4) mittelbar oder unmittelbar zur Anlage bringbar ist.

11. Halterung nach einem der Ansprüche 8 bis 10,
**dadurch gekennzeichnet,**
**dass** das Sockelelement (2) zumindest abschnittsweise ein Außengewinde aufweist, auf das ein Befestigungsring (18) derart aufschraubbar ist, dass das plattenförmige Bauteil (4) zwischen dem flanschartig umlaufenden oder konisch angeschrägten Randbereich (17) des ersten Sockelteilelements (15, 23) und dem Befestigungsring (18) mittelbar oder unmittelbar klemmbar ist.

## Claims

1. A mount for plate-shaped components, in particular glass plates, with a socket element (2), which penetrates a recess in the plate-shaped component, thereby fixing said component, and a hinged bolt (3), which at its first end comprises a ball element (6), which is rotatably mounted in a recess (7) in the socket element, and with its opposite second end may be secured to a support structure, thereby fixing the socket element,
**characterised in that**
the ball element (6) is at least slightly linearly displaceable in the recess (7) in the socket element (2) along the longitudinal axis of the recess, wherein the recess (7) in the socket element (2) for receiving the ball element (6) comprises at least two rotationally symmetrical regions, in each of which there is arranged at least one spring element (12, 13), acting indirectly or directly on the ball element (6), and whose axis of rotation extends substantially along the longitudinal axis of the hinged bolt (3), and wherein the first portion may receive the ball element (6) and comprises a circular cylindrical circumferential surface, and wherein the second portion may be penetrated by the shank (14) of the hinged bolt (3) and comprises a conical circumferential surface, which tapers on the side facing towards the ball element (6).

2. A mount according to claim 1,
**characterised in that**
the spring elements (12, 13) act directly on the ball element (6), and the sides of the spring elements (12, 13) which come to rest against the ball element (6) are constructed at least in places with a shape complementary to the ball element (6).

3. A mount according to claim 2,
**characterised in that**
the spring elements (12, 13) are constructed as helical springs.

4. A mount according to one of claims 1 to 3,
**characterised in that**
the resilient properties of the two spring elements (12, 13) on the opposite sides of the ball element (6) are adapted to one another in such a manner that, in the non-loaded state of the mount (1), the central point of the ball element (6) comes to lie substantially in the radial plane in which the cylindrical and conical regions of the recess (7) merge with one another in the socket element (2).

5. A mount according to one of claims 1 to 4,
**characterised in that** the resilient properties of the two spring elements (12, 13) on the opposite sides of the ball element (6) are adapted to one another in such a manner that, in the non-loaded state of the mount (1), the central point of the ball element (6) comes to lie substantially in a central plane between the surfaces of the plate-shaped component (4).

6. A mount according to one of claims 1 to 5,
**characterised in that**
the spring element (13) which is arranged in the conical region of the recess (7) in the socket element (2) comprises a conical recess, which may be penetrated by the shank (14) of the hinged bolt (3) and tapers towards the ball element (6).

7. A mount according to one of claims 1 to 6,
**characterised in that**
the socket element (2) comprises at least two partial socket elements (15, 16, 23, 24), wherein the two partial socket elements (15, 16, 23, 24) may be secured to one another with their mutually facing radial surfaces, enclosing the ball element (6) and the spring elements (12, 13).

8. A mount according to claim 7,
**characterised in that**
the cylindrical region of the recess (7) for receiving the ball element (6) is arranged in the first partial socket element (23) and the conical region of the recess (7) for receiving the ball element (6) is arranged in the second partial socket element (24).

9. A mount according to claim 8,
**characterised in that**
the cylindrical and conical regions of the recess (7) for receiving the ball element (6) are arranged in the first partial socket element (15) and the second partial socket element (16) is constructed substantially as a cover, which may be penetrated by the shank (14) of the hinged bolt (3) and may be secured to the end of the first partial socket element (15) pointing towards the shank (14) of the hinged bolt (3), enclosing the ball element (6) and the spring elements (12, 13).

10. A mount according to one of claims 8 or 9,
**characterised in that**
the first partial socket element (15, 23), at its end facing away from the hinged bolt (3), comprises a flange-like circumferential or conically bevelled peripheral region (17), which may be brought to rest indirectly or directly against the plate-shaped component (4).

11. A mount according to one of claims 8 to 10,
**characterised in that**
the socket element (2) comprises, at least in places, an external thread, onto which a securing ring (18) may be screwed in such a manner that the plate-shaped component (4) may be indirectly or directly clamped between the flange-like circumferential or conically bevelled peripheral region (17) of the first partial socket element (15, 23) and the securing ring (18).

## Revendications

1. Fixation pour pièces de construction en forme de panneaux, en particulier panneaux de verre, avec un socle (2), qui pénètre un évidement dans la pièce de construction en forme de panneau en fixant celle-ci, et un boulon articulé (3) qui comprend à sa première extrémité un élément sphérique (6) qui est logé de manière rotative dans un évidement (7) du socle, et qui par fixation du socle peut être fixé par sa seconde extrémité opposée à une structure porteuse
**caractérisé en ce que**,
l'élément sphérique (6) peut être déplacé linéairement dans l'évidement (7) du socle (2) au moins légèrement le long de l'axe longitudinal de l'évidement, l'évidement (7) du socle (2) comprenant au moins deux zones à symétrie de révolution pour loger l'élément sphérique (6), dans lesquelles est disposé à chaque fois au moins un élément à ressort (12, 13), agissant indirectement ou directement sur l'élément sphérique (6) et dont l'axe de rotation s'étend sensiblement le long de l'axe longitudinal du boulon articulé (3), la première partie pouvant accueillir l'élément sphérique (6) et présentant une surface d'enveloppe cylindrique circulaire, et la deuxième partie étant pénétrable par la tige (14) du boulon articulé (3) et présentant une surface d'enveloppe conique, qui se rétrécit du côté tourné vers l'élément sphérique (6).

2. Fixation selon la revendication 1
**caractérisé en ce que**,
les éléments à ressort (12,13) agissent directement sur l'élément sphérique (6) et les côtés des éléments à ressort (12,13), qui se viennent en appui contre l'élément sphérique (6), présentent au moins partiellement une complémentarité de forme par rapport à l'élément sphérique (6).

3. Fixation selon la revendication 2
**caractérisé en ce que**,
les éléments à ressort (12, 13) sont sous forme d'éléments à ressort cylindriques.

4. Fixation selon l'une quelconque des revendications 1 à 3
**caractérisé en ce que**,
les propriétés élastiques des deux éléments à ressort (12, 13) sur les côtés opposés de l'élément sphérique (6) sont adaptées l'une à l'autre de telle façon que dans l'état non chargé de la fixation (1) le centre de l'élément sphérique (6) se place sensiblement dans le plan radial dans lequel la zone cylindrique et la zone conique de l'évidement (7) se rencontrent dans le socle (2).

5. Fixation selon l'une quelconque des revendications 1 à 4
**caractérisé en ce que**,
les propriétés élastiques des deux éléments à ressort (12, 13) sur les côtés opposés de l'élément sphérique (6) sont adaptées l'une à l'autre de telle façon que dans l'état non chargé de la fixation (1) le centre de l'élément sphérique (6) se place sensiblement dans un plan central entre les surfaces de la pièce de construction en forme de panneau (4).

6. Fixation selon l'une quelconque des revendications 1 à 5 **caractérisé en ce que**,
le ressort (13), qui est disposé dans la zone conique de l'évidement (7) du socle (2), présente un évidement conique qui est pénétrable par la tige (14) du boulon articulé (3) et se rétrécit en direction de l'élément sphérique (6).

7. Fixation selon l'une quelconque des revendications 1 à 6
**caractérisé en ce que**,
le socle (2) comprend au moins deux parties de socle (15, 16, 23, 24), les deux parties de socle (15, 16, 23, 24) peuvent être fixées l'une à l'autre par leurs surfaces radiales se faisant face en incluant l'élément sphérique (6) et les éléments à ressort (12, 13).

8. Fixation selon la revendication 7
**caractérisé en ce que**,
la zone cylindrique de l'évidement (7) est disposée dans la première partie de socle (23) pour le logement de l'élément sphérique (6) et la zone conique de l'évidement (7) est disposée dans la deuxième partie de socle (24) pour le logement de l'élément sphérique (6).

9. Fixation selon la revendication 8
**caractérisé en ce que**,
la zone cylindrique et la zone conique de l'évidement (7) sont disposées dans la première partie de socle (15) pour le logement de l'élément sphérique (6) et la deuxième partie de socle (16) est réalisée sensiblement comme un couvercle, qui est pénétrable par la tige (14) du boulon articulé (3) et qui peut être fixé à l'extrémité de la première partie de socle (15) dirigée vers la tige (14) du boulon articulé (3) en incluant l'élément sphérique (6) et les éléments à ressort (12, 13).

10. Fixation selon la revendication 8 ou 9
**caractérisé en ce que**,
la première partie de socle (15, 23) comprend à son extrémité éloignée du boulon articulé (3) une zone périphérique (17), biseautée de façon conique ou qui encercle comme une bride, qui peut être mise indirectement ou directement contre la pièce de construction (4) en forme de panneau.

11. Fixation selon l'une quelconque des revendications 8 à 10 **caractérisé en ce que**,
le socle (2) comporte, au moins sur une section, un filetage extérieur sur lequel une bague de fixation (18) peut être vissée de telle façon que la pièce de construction (4) en forme de panneau peut être serrée indirectement ou directement entre la zone périphérique (17) de la première partie de socle (15, 23), biseautée de façon conique ou qui encercle comme une bride, et la bague de fixation (18).
